(19) Europäisches Patentamt
European Patent Office
Office européen des brevets

(11) EP 3 709 648 A1

(12) **EUROPEAN PATENT APPLICATION**

(43) Date of publication:
**16.09.2020 Bulletin 2020/38**

(21) Application number: **19305294.1**

(22) Date of filing: **12.03.2019**

(51) Int Cl.:
*H04N 19/176* (2014.01)    *H04N 19/117* (2014.01)
*H04N 19/463* (2014.01)    *H04N 19/14* (2014.01)
*H04N 19/82* (2014.01)    *H04N 19/192* (2014.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **InterDigital VC Holdings, Inc.**
**Wilmington, DE 19809 (US)**

(72) Inventors:
- **POIRIER, Tangi**
 **35576 CESSON-SEVIGNE (FR)**
- **BORDES, Philippe**
 **35576 CESSON-SEVIGNE (FR)**
- **URBAN, Fabrice**
 **35576 CESSON-SEVIGNE (FR)**

(74) Representative: **Huchet, Anne**
 **InterDigital CE Patent Holdings**
 **20, rue Rouget de Lisle**
 **92130 Issy-les-Moulineaux (FR)**

(54) **METHOD AND APPARATUS FOR VIDEO ENCODING AND DECODING WITH SUBBLOCK BASED LOCAL ILLUMINATION COMPENSATION**

(57)     Different implementations are described, particularly implementations for video encoding and decoding based on a linear model responsive to neighboring samples are presented. Accordingly, for a block being encoded or decoded in a picture, refined linear model parameters are iteratively determined for a current subblock in the block and for encoding the block, the local illumination compensation uses a linear model for the current subblock based on the refined linear model parameters. In a first embodiment, the number N of reconstructed samples increases with the available data for the subblock. In a second embodiment, partial linear model parameters are determined for the subblock and refined linear model parameters are derived from a weighted sums of partial linear model parameters. In a third embodiment, the subblocks are independently LIC processed.

FIG. 12

EP 3 709 648 A1

**Description**

TECHNICAL FIELD

At least one of the present embodiments generally relates to, e.g., a method or an apparatus for video encoding or decoding, and more particularly, to a method or an apparatus for determining, for the block being encoded or decoded, linear model parameters for a local illumination compensation based on neighboring samples; the block being partitioned into subblocks processed in parallel for motion compensation.

BACKGROUND

The domain technical field of the one or more implementations is generally related to video compression. At least some embodiments relate to improving compression efficiency compared to existing video compression systems such as HEVC (HEVC refers to High Efficiency Video Coding, also known as H.265 and MPEG-H Part 2 described in "ITU-T H.265 Telecommunication standardization sector of ITU (10/2014), series H: audiovisual and multimedia systems, infrastructure of audiovisual services - coding of moving video, High efficiency video coding, Recommendation ITU-T H.265"), or compared to under development video compression systems such as VVC (Versatile Video Coding, a new standard being developed by JVET, the Joint Video Experts Team).

To achieve high compression efficiency, image and video coding schemes usually employ prediction, including motion vector prediction, and transform to leverage spatial and temporal redundancy in the video content. Generally, intra or inter prediction is used to exploit the intra or inter frame correlation, then the differences between the original image and the predicted image, often denoted as prediction errors or prediction residuals, are transformed, quantized, and entropy coded. To reconstruct the video, the compressed data are decoded by inverse processes corresponding to the entropy coding, quantization, transform, and prediction.

A recent addition to high compression technology includes a prediction model based on a linear modeling responsive to the neighborhood of the block being processed. In particular, some prediction parameters are computed, in the decoding process, based on samples located in a spatial neighborhood of the block being processed. Such spatial neighborhood contains already reconstructed picture samples and corresponding samples in a reference picture. Such prediction models with prediction parameters determined based on spatial neighborhood is implemented in the Local Illumination Compensation (LIC). Besides, others approaches of high compression technology include new tools for motion compensation such as Affine Motion Compensation, Subblock-based Temporal Vector Prediction (sbTMVP), Bi-directional optical flow (BDOF), Decoder-Side Motion Vector refinement (DMVR). Some of these tools require processing a block in multiple subblocks in several successive operations. Tools are applied sequentially in the decoding process. In order to cope with real-time decoding constraints, the decoding process is pipelined so that blocks and sub-blocks are processed in parallel. This pipelined decoding process raises issue regarding the availability of samples in the spatial neighborhood of the block used in LIC. It is thus desirable to optimize the decoding pipeline for Local Illumination Compensation.

SUMMARY

The purpose of the invention is to overcome at least one of the disadvantages of the prior art. For this purpose, according to a general aspect of at least one embodiment, a method for video encoding is presented, comprising determining, for a block being encoded in a picture, linear model parameters for a local illumination compensation based on spatial neighboring reconstructed samples and corresponding reference samples; the block being partitioned into subblocks processed in parallel for motion compensation; and encoding the block using local illumination compensation based on the determined linear model parameters. The determining of the linear model parameters for the block further comprises iteratively determining refined linear model parameters for a current subblock in the block and the local illumination compensation uses a linear model for the current subblock based on the refined linear model parameters for encoding the block.

According to another general aspect of at least one embodiment, a method for video decoding is presented, comprising determining, for a block being decoded in a picture, linear model parameters for a local illumination compensation based on spatial neighboring reconstructed samples and corresponding reference samples; the block being partitioned into subblocks processed in parallel for motion compensation; and decoding the block using local illumination compensation based on the determined linear model parameters. The determining of the linear model parameters for the block further comprises iteratively determining refined linear model parameters for a current subblock in the block and the local illumination compensation uses a linear model for the current subblock based on the refined linear model parameters for decoding the block.

According to another general aspect of at least one embodiment, an apparatus for video encoding is presented comprising means for implementing any one of the embodiments of the encoding method.

According to another general aspect of at least one embodiment, an apparatus for video decoding is presented comprising means for implementing any one of the embodiments of the decoding method.

According to another general aspect of at least one embodiment, an apparatus for video encoding is provided, comprising one or more processors, and at least one memory. The one or more processors is configured to implement to any one of the embodiments of the encoding method.

According to another general aspect of at least one embodiment, an apparatus for video decoding is provided, comprising one or more processors and at least one memory. The one or more processors is configured to implement to any one of the embodiments of the decoding method.

According to another general aspect of at least one embodiment, determining the refined linear model parameters for a current subblock comprises accessing spatial neighboring reconstructed samples of the current subblock and corresponding reference samples; and determining the refined linear model parameters based on previously accessed spatial neighboring reconstructed samples and corresponding reference samples for the block. Advantageously, data for neighboring samples are used when they become available and LIC is performed by subblocks.

According to a variant of this embodiment, determining the refined linear model parameters for a current subblock comprises determining the refined linear model parameters based on all previously accessed spatial neighboring reconstructed samples and corresponding reference samples for the block.

According to another variant of this embodiment, determining the linear model parameters for the block comprises determining the refined linear model parameters for the subblocks in the block iteratively in raster-scan order.

According to another variant of this embodiment, determining the refined linear model parameters for a current subblock comprises determining the refined linear model parameters based on previously accessed spatial neighboring reconstructed samples and corresponding reference samples closest to samples of the current subblock.

According to another variant of this embodiment, the accessed spatial neighboring reconstructed samples of the current subblock and corresponding reference samples are stored into a buffer of previously accessed spatial neighboring reconstructed samples and corresponding reference samples for the block; and determining the refined linear model parameters is based on stored samples

According to another variant of this embodiment, partial sums from the accessed spatial neighboring reconstructed samples of the current subblock and corresponding reference samples are processed and stored into a buffer of partial sums for the block and; determining the refined linear model parameters is based on stored partial sums.

According to another general aspect of at least one embodiment, determining the refined linear model parameters for a current subblock comprises determining partial linear model parameters based on the spatial neighboring reconstructed samples and corresponding reference samples for a current subblock; and determining refined linear model parameters from a weighted sum of the previously determined partial linear model parameters for the subblocks.

According to another general aspect of at least one embodiment, the refined linear model parameters are determined independently for the subblocks of the block.

According to another general aspect of at least one embodiment, the reconstructed samples and corresponding reference samples are co-located relatively to a L-shape comprising a row of samples over the block and a column of samples at the left of the block, the co-location being determined according motion compensation information for the block resulting from motion compensation sequential processing.

According to another general aspect of at least one embodiment, motion compensation information for the block comprises a motion predictor and the motion predictor for the block being refined for each subblock in parallel into motion compensation information; and the co-location is determined according to motion predictor for the block instead of motion compensation information for the block.

According to another general aspect of at least one embodiment, a non-transitory computer readable medium is presented containing data content generated according to the method or the apparatus of any of the preceding descriptions.

According to another general aspect of at least one embodiment, a signal is provided comprising video data generated according to the method or the apparatus of any of the preceding descriptions.

One or more of the present embodiments also provide a computer readable storage medium having stored thereon instructions for encoding or decoding video data according to any of the methods described above. The present embodiments also provide a computer readable storage medium having stored thereon a bitstream generated according to the methods described above. The present embodiments also provide a method and apparatus for transmitting the bitstream generated according to the methods described above. The present embodiments also provide a computer program product including instructions for performing any of the methods described.

BRIEF DESCRIPTION OF THE DRAWINGS

FIG. 1 illustrates an example of Coding Tree Unit (CTU) and Coding Tree (CT) concepts to represent a compressed HEVC picture.

FIG. 2 illustrates the deriving of LIC parameters from neighboring reconstructed samples and the corresponding reference samples translated with motion vector for square and rectangular block in prior art.

FIGs. 3 and 4 illustrate examples of derivation of LIC parameters and compensation of local illumination in case of bi- prediction.

FIG. 5 illustrates examples of subsampling of L-shape neighboring samples for rectangular blocks.

FIGs. 6, 7a, 7b and 8 respectively illustrate examples of subblock-based motion compensation prediction: the affine motion compensated prediction, the subblock-based temporal vector prediction; the decoder-side motion vector refinement.

FIG. 9 illustrates an example encoding or decoding method comprising using linear model in a pipelined subblock-based motion compensation according to prior art.

FIG. 10 illustrates an example of an encoding or decoding method according to a general aspect of at least one embodiment.

FIG. 11 illustrates an example encoding or decoding method comprising using linear model in a pipelined subblock-based motion compensation according to a general aspect of at least one embodiment.

FIGs. 12, 13, and 14 illustrate various example of the reference samples corresponding to a current subblock LIC linear model according to a general aspect of at least one embodiment.

FIG. 15 illustrates an example of an encoding or decoding method according to a general aspect of at least one embodiment.

FIG 16 illustrates a block diagram of an embodiment of video encoder in which various aspects of the embodiments may be implemented.

FIG. 17 illustrates a block diagram of an embodiment of video encoder in which various aspects of the embodiments may be implemented.

FIG. 18 illustrates a block diagram of an example apparatus in which various aspects of the embodiments may be implemented.

DETAILED DESCRIPTION

It is to be understood that the figures and descriptions have been simplified to illustrate elements that are relevant for a clear understanding of the present principles, while eliminating, for purposes of clarity, many other elements found in typical encoding and/or decoding devices. It will be understood that, although the terms first and second may be used herein to describe various elements, these elements should not be limited by these terms. These terms are only used to distinguish one element from another.

The various embodiments are described with respect to the encoding/decoding of a picture. They may be applied to encode/decode a part of picture, such as a slice or a tile, or a whole sequence of pictures.

Various methods are described above, and each of the methods comprises one or more steps or actions for achieving the described method. Unless a specific order of steps or actions is required for proper operation of the method, the order and/or use of specific steps and/or actions may be modified or combined.

At least some embodiments relate to method for deriving and applying LIC parameters per subblocks processed in parallel in a pipelined architecture.

In section 1, some limitations regarding the derivation of the linear model parameters for illumination compensation are disclosed.

In section 2, several embodiments of a modified method for deriving the linear model parameters for illumination compensation compatible with a pipelined process are disclosed.

In section 3, additional information and generic embodiments are disclosed.

**1 Limitations regarding the derivation the linear model parameters for LIC**

*1.1 Introduction to derivation of LIC parameters*

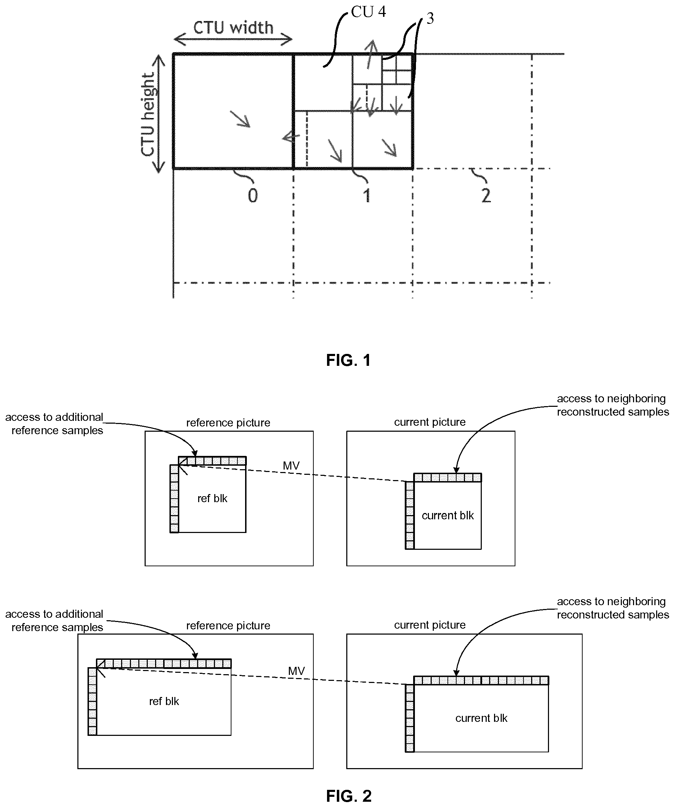

The tool Local Illumination Compensation (LIC) based on a linear model is used to compensate for illumination changes between a picture being encoded and its reference pictures, using a scaling factor a and an offset b. It is enabled or disabled adaptively for each inter-mode coded coding unit (CU). When LIC applies for a CU, a mean square error (MSE) method is employed to derive the parameters *a* and *b* by using the neighbouring samples of the current CU and their corresponding reference samples. More specifically, the neighbouring samples of the current CU (current blk on FIG. 2) and the neighbouring samples of a corresponding reference CU (ref blk on FIG. 2) identified in a reference picture by motion information MV relative to the current CU (current blk on FIG. 2) are used. The LIC parameters minimize an error between neighboring samples of the current CU and linearly modified corresponding reference samples. For instance, the LIC parameters minimize the mean square error difference (MSE) between the top and left neighboring reconstructed samples rec_cur(*r*) of the current CU (access to neighboring reconstructed samples on the right of FIG. 2) and the top and left neighboring reconstructed samples rec_ref(*s*) of their corresponding reference samples determined by the inter prediction (access to additional reference samples on the left of FIG. 2), with s = r+MV, MV being a motion vector from inter prediction :

$$\text{dist} = \sum_{r \in Vcur, s \in Vref}(\text{rec\_cur}(r) - a.\,\text{rec\_ref}(s) - b)^2 \quad (\text{eq } 1)$$

The value of (a,b) are obtained using a least square minimization (eq.2):

$$a \quad = \left( \frac{\sum ref(s) \times cur(r) - \dfrac{\sum ref(s) \times \sum cur(r)}{N}}{\sum cur(r)^2 - \dfrac{\sum ref(s) \times \sum ref(s)}{N}} \right)$$

$$b \quad = \frac{\sum cur(r)}{N} - a \quad \times \frac{\sum ref(s)}{N} \qquad (\text{eq } 2)$$

The enabling or disabling of LIC for the current CU depends on a flag associated to the current CU, called the LIC flag.

Once the LIC parameters are obtained by the encoder or the decoder for the current CU, then the prediction *pred*(*current_block*) of current CU consists in the following (uni-directional prediction case):

$$\boldsymbol{pred}(current\_block) = a \times ref\_block + b \quad (\text{eq.3})$$

Where *current_block* is the current block to predict, **pred**(*current_block*) is the prediction of the current block, and *ref_block* is the reference block built with regular motion compensation (MV) process and used for the temporal prediction of the current block.

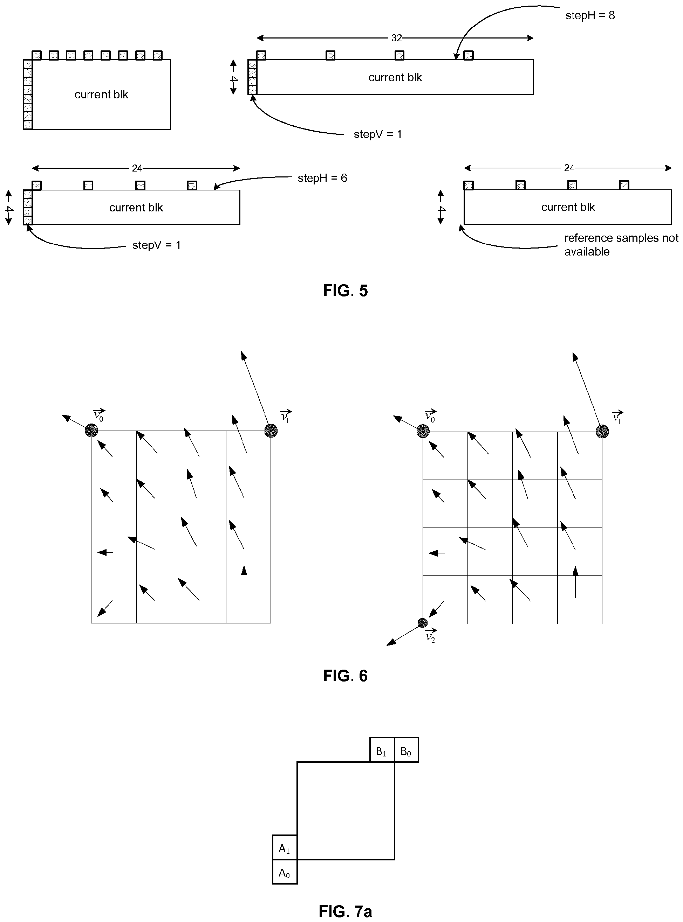

The value of N, number of reference samples used in the derivation is adjusted in order to the sum terms in eq.2 to remain below the maximum integer storage number value allowed (e.g. N < $2^{16}$) or to cope with rectangular block. Accordingly, the reference samples are subsampled (with a sub-sampling step of stepH or stepV, horizontally and/or vertically) prior to be used for deriving LIC parameters (a,b) as illustrated on FIG. 5.

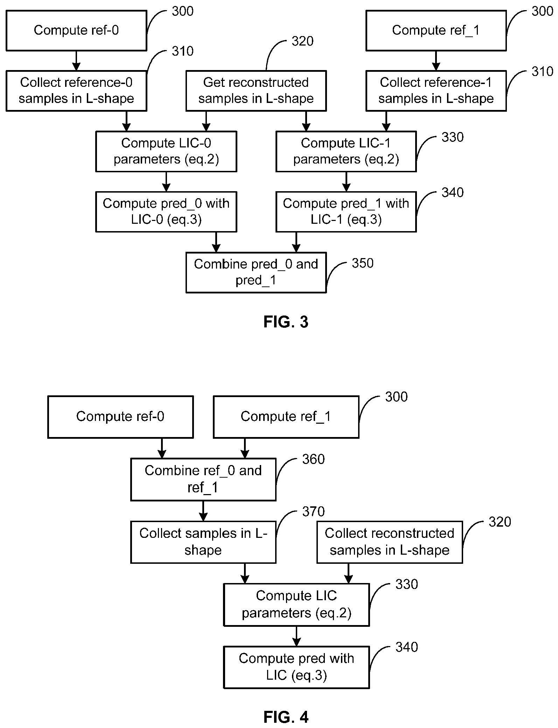

The set of neighboring reconstructed samples and the set of reference samples (see gray samples in FIG. 3) have the same number and same pattern. In the following, we will denote "left samples" the set of neighboring reconstructed (or the set of reference samples) situated at the left of the current block and denote "top samples" the set of neighboring reconstructed (or the set of reference samples) located at the top of the current block. We will denote "samples set" the one of "left samples" and "top samples" sets. Preferably the "samples set" belongs to a left or top neighboring line of the block. Usually, the term "L-shape" denotes the set composed of the samples situated on the row above the current block (top neighboring line) and of the samples situated on the column at the left (left neighboring line) of the current block, as depicted in grey in FIG. 2.

In case of bi-prediction, the local illumination compensation is adapted for both reference pictures. According to a first variant (called method-a), the LIC process is applied twice, first on reference 0 prediction (LIST-0) and second on the reference 1 prediction (LIST_1). FIG. 3 illustrates the derivation of LIC parameters and their application for each of reference 0 prediction (LIST-0) and reference 1 prediction (LIST_1) according to the first variant. Then, the two predictions are combined together as usual using default weighting (P = (P0 + P1 + 1)>>1) or bi-prediction weighted averaged (BPWA): P = (g0.P0 + g1.P1 + (1<<(s-1)))>>s).

According to a second variant (called method-b), in case of bi-prediction, the regular predictions are combined first and then one single LIC process is applied. FIG. 2 illustrates the derivation of LIC parameters and their application for combined prediction from LIST-0 and LIST_1 according to the second variant.

According to yet another second variant (called method-c, based on method-b), in case of bi-prediction, the regular predictions are combined first and then the LIC-0 and LIC-1 parameters are derived directly from the minimization of the error:

$$\text{dist} = \sum_{r \in V\text{cur}, s \in V\text{ref}}(\text{rec\_cur}(r) - a0.\,\text{rec\_ref0}(s) - a1.\,\text{rec\_ref1}(s) - b)^2 \qquad (\text{eq.2b})$$

*1.2 Pipelined subblocks processing in inter prediction*

In the latest development of WC, some prediction processes in inter CUs are performed per subblock, further splitting CUs into smaller prediction units, and computing the transform on the bigger CU. These tools increase data dependency constrains because subblocks are decoded in parallel to cope with real-time constraints and neighboring pixels of subblocks are thus not all available. For instance, the neighboring pixels in the current picture are not available. They are being encoded/decoded. The neighboring pixels in the reference picture are available, but the motion vector to identify the reference block is not known yet (dmvr, sbTMVP cases). Plus, in some implementations, memory access is a bottleneck, which constrains accessing neighboring pixels only during the process of the given subblock. Some of these tools are briefly detailed hereafter for the sake of completeness.

1.2.1 Affine motion compensated prediction (4x4 sub-blocks)

In HEVC, only translation motion model is applied for motion compensation prediction (MCP). While in the real world, there are many kinds of motion, e.g. zoom in/out, rotation, perspective motions and the other irregular motions. In the latest development of WC, a block-based affine transform motion compensation prediction is applied. Affine motion field of the block is described by motion vectors (CPMVs) of two control points (4-parameters) or three control points (6-parameter). A subblock based affine transform prediction is applied for each $4 \times 4$ luma sub-block of a current 16x16 block, as shown in FIG. 6.

1.2.2 Subblock-based temporal motion vector prediction (SbTMVP) (8x8 sub-blocks)

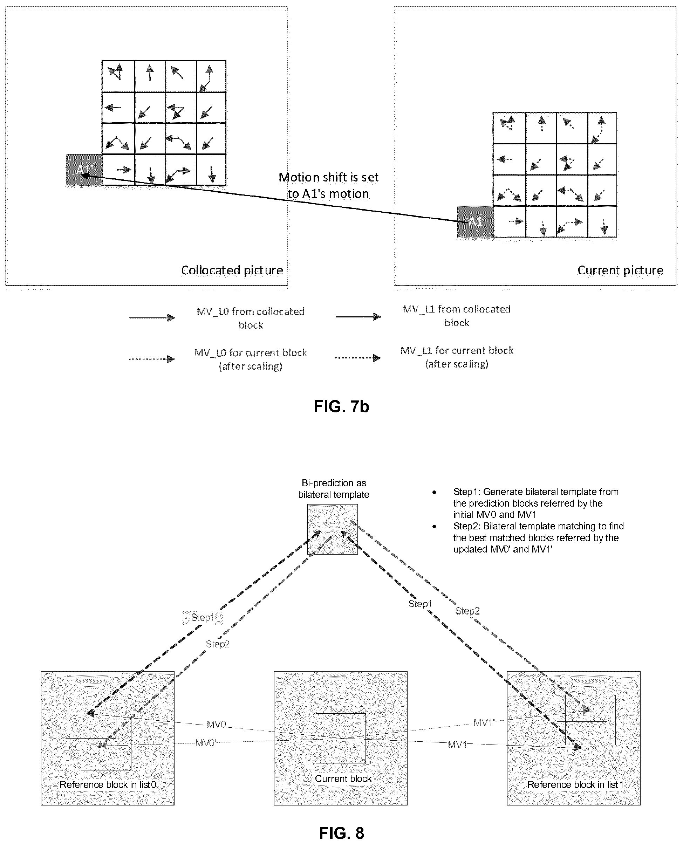

The latest development of VVC also supports the subblock-based temporal motion vector prediction (SbTMVP) method. Similar to the temporal motion vector prediction (TMVP) in HEVC, SbTMVP uses the motion field in the collocated picture to improve motion vector prediction and merge mode for CUs in the current picture. SbTMVP predicts motion at sub-CU level. Moreover, SbTMVP applies a motion shift before fetching the temporal motion information from the collocated picture, where the motion shift is obtained from the motion vector from one of the spatial neighboring blocks of the current CU. FIG. 7a illustrates the spatial neighboring blocks $A_0$, $A_1$, $B_0$, $B_1$ used by SbTMVP and FIG. 7b illustrates deriving sub-CU motion field by applying a motion shift from spatial neighbor and scaling the motion information from the corresponding collocated sub-CUs. The sub-CU size used in SbTMVP is fixed to be 8x8, and as done for affine merge mode, SbTMVP mode is only applicable to the CU with both width and height are larger than or equal to 8.

1.2.3 Bi-directional optical flow (BDOF) (4x4 sub-blocks)

In the latest development of WC, the bi-directional optical flow (BDOF) tool, previously referred to as BIO, is used to refine the bi-prediction of a CU at the $4 \times 4$ subblock level. BDOF mode is based on the optical flow concept, which assumes that the motion of an object is smooth. For each 4x4 sub-block, a motion refinement $(v_x, v_y)$ is calculated by minimizing the difference between the L0 and L1 prediction samples. The motion refinement is then used to adjust the bi-predicted samples in the 4x4 sub-block.

1.2.4 DMVR (16x16 sub-blocks)

In the latest development of WC, Decoder-side Motion Vector Refinement (DMVR) is a bi-prediction technique for Merge blocks with two initially signalled motion vectors (MV) that can be further refined by using bilateral matching prediction. In bi-prediction operation, a refined MV is searched around the initial MVs in the reference picture list L0 and reference picture list L1. For each 16x16 (maximum size; if block is smaller, the block contains only one sub-block) sub-block, the SAD between the 2 reference blocks based on each MV candidate around the initial MV is calculated. The MV candidate with the lowest SAD becomes the refined MV and used to generate the bi-predicted signal.

1.2.5 Pipelined subblocks processing

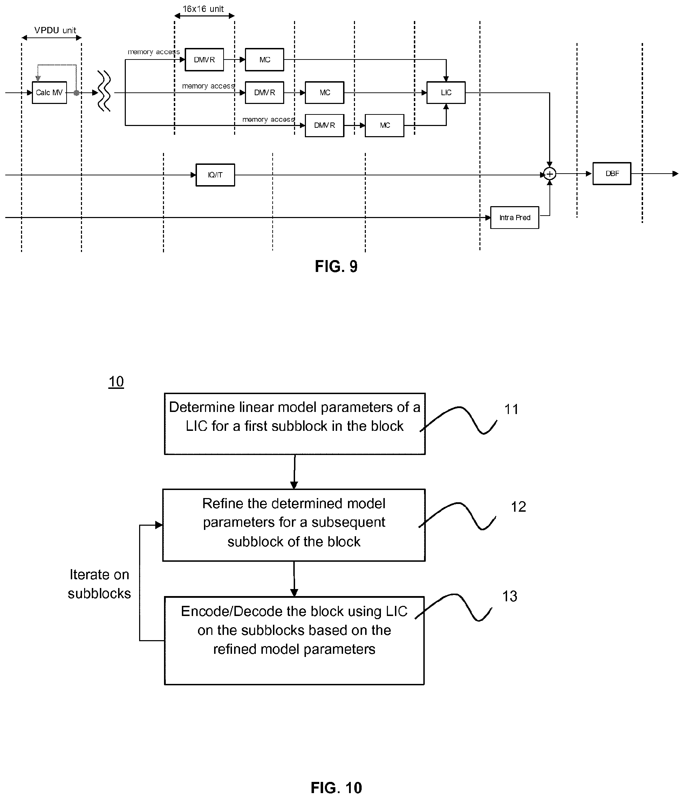

As presented above, some tools for inter prediction may require processing a current block in multiple subblocks, with several successive operations. In order to cope with real-time constraints, the successive operations are pipelined so that the multiple subblocks are processed in parallel. FIG. 9 illustrates an example encoding or decoding method comprising using linear model in a pipelined subblock motion compensation according to prior art. Virtual pipeline data units (VPDUs) are defined as non-overlapping units in a picture. In hardware decoders, successive VPDUs are processed by multiple pipeline stages at the same time. The VPDU size is roughly proportional to the buffer size in most pipeline stages, so it is important to keep the VPDU size small. A typical example of VPDU size is 64x64 luma samples. In order to keep the VPDU size as 64x64 luma samples, normative partition restrictions (with syntax signaling modification) are applied. In a first step Calc MV, initial motion information (such as a motion vector for the block) for the block (VPDU unit) are determined. In an encoding method, initial motion information is obtained from motion estimation. In a decoding method, initial motion information is obtained from the encoded bitstream. Then, the initial motion information is refined for each subblock in pipelined operations. For instance, the 32x32 block is partitioned into 16x16 subblocks. Data for a current subblock is accessed. Then subblock processing, for instance in a step DMVR, is applied resulting in refined motion information for the current subblock. In parallel (second line of FIG. 9), data for a subsequent subblock is accessed using the same hardware resources (memory access) as previously used for the current subblock. Then prediction from motion compensation are determined in a step MC. While in parallel, subblock processing is applied resulting in refined motion information for the subsequent subblock (of second line of FIG. 9).

Since the derivation of LIC parameters uses refined motion information to determine reference samples for the subblocks, the pipeline imposes constrains on the availability of samples that are necessary to compute LIC parameters for the block.

Thus, according to a prior art approach illustrated on FIG.9, since derivation of LIC parameter can not be processed in parallel in the pipeline due to unavailability of data for subsequent subblocks, the LIC derivation is postponed after all the subblocks of the block are motion compensated. Parallel computation for the block is compromised and delay is introduced in the pipeline.

According to another prior art approach, LIC is disabled in case where the subblock are processed in parallel for motion compensation. This approach raises the issue of the performances of the encoding/decoding process.

Accordingly, at least one embodiment improves the linear model process through an iterative derivation of refined LIC parameters and application of the resulting linear model per subblock once the motion information for the subblocks of the block are available. This is achieved by successively increasing the number of neighboring reconstructed samples and the corresponding reference samples in the derivation with availability of data, deriving LIC parameters from partial LIC parameters derived from neighboring samples of a subblock, by deriving LIC parameters for each subblock independently or by using motion information from the initial determination as detailed in the following section.

**2 At least one embodiment of method comprising refining and applying LIC parameters by subblock**

In order to cope with the limitations presented in section 1, a general aspect of at least one embodiment aims to improve the accuracy of the linear model in a pipelined implementation by refining and applying LIC parameters by subblock.

*2.1 A general aspect of at least one embodiment comprising iteratively refining and applying LIC parameters per subblock.*

FIG. 10 illustrates an example of an encoding or decoding method according to a general aspect of at least one embodiment. The method of FIG. 10 comprises adaptation of the neighboring reconstructed samples and corresponding reference samples used in linear model parameters derivation according to availability of required data issued from pipelined parallel processing.

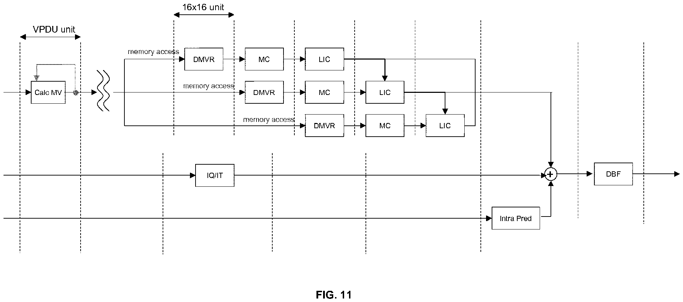

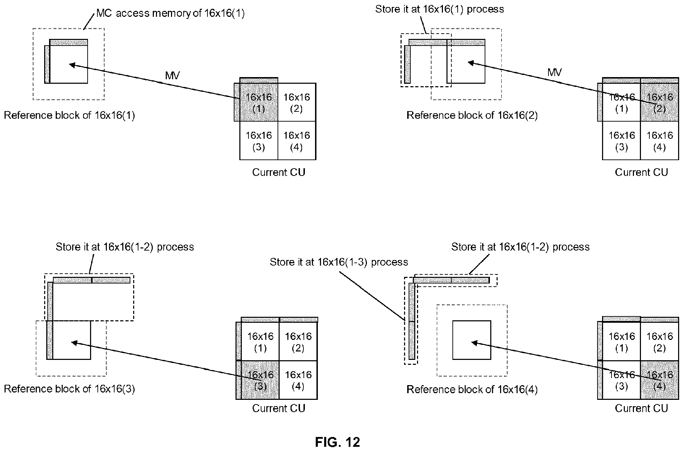

The encoding or decoding method 10 determines linear model parameters based on spatial neighboring reconstructed samples and corresponding reference samples of the block being encoded or decoded. The linear model is then used in the encoding or decoding method. Such linear model parameters comprise for instance a scaling factor a and an offset b of the LIC model as defined in equation 2 and 3. The block is partitioned into subblocks processed in parallel for inter prediction by motion compensation in a pipeline as illustrated on FIG. 11. According to a non-limiting example, a 32x32 block is partitioned into 4 16X16 subblocks as illustrated on FIGs 12 to 14. The subblocks are ordered from 1 to 4 according to their processing order. According to a non-limiting example, the processing order is the raster scan order as represented on FIGs 12 to 14. According to a non-limiting example, the processing order is determined from the location of the subblock in the block. Naturally, the present principles will be easily deduced for others block sizes, subblock partitions or order of subblocks.

In a first step 11, the encoding or decoding method 10 determines the linear model parameters for the first subblock (1 on FIG.12) of the current block (current CU on FIG 12). Based on the available data resulting from the subblock-based motion compensation, the spatial neighboring reconstructed samples of the first subblock and the spatial neighboring samples of the reference subblock (reference block of 16x16(1)) are accessed. The reference subblock is a co-located subblock of the first subblock in a reference picture according to motion compensation information MV. By sake of conciseness, the spatial neighboring reconstructed samples of a subblock/block and the spatial neighboring samples of the reference subblock/block may be referred to as neighboring samples of the subblock/block in the present disclosure. The linear model parameters are for instance determined according to equation 2 where N is the number of spatial neighboring reconstructed samples of the first subblock. Advantageously, both the top samples and left samples for the first subblock are available. In a step 13, the linear model based on the first subblock LIC parameters is then applied to the reference subblock as in Equation 3 to obtain a LIC prediction for the first subblock. The prediction is then used in the encoding or decoding method.

In parallel of the processing of the first subblock, the second subblock (2 on FIG.12) is processed. In a step 12, the refined linear model parameters for the second subblock is determined based on the newly available data resulting from the subblock-based motion compensation of first and second subblock. As shown on FIG. 12, the top-right samples of the current block are now accessible for the current subblock and for the corresponding reference subblock (reference block of 16x16(2)). As latter on detailed with examples in sections 2.2.1 and 2.2.2, any combination of the spatial neighboring reconstructed samples and corresponding reference samples of the first subblock or of the second subblock are used for determining the refined LIC parameters for the second subblock. Then, the step 13 is repeated for the second subblock: the linear model based on the refined LIC parameters is then applied to the reference subblock as in equation 3 to obtain a LIC prediction for the second subblock. The LIC prediction is then used in the encoding or decoding method.

Again, in parallel of the processing of the first subblock and second subblock (third line of the pipeline of FIG. 11), the third subblock (3 on FIG.12) is processed. In an iterated step 12, the linear model parameters for the third subblock is determined based on the newly available data resulting from the subblock-based motion compensation of first, second and third subblocks. As shown on FIG. 12, the bottom-left samples of the current block are now accessible for the current subblock and for the corresponding reference subblock (reference block of 16x16(3)). For a 4 subblocks partition, the neighboring samples of both first, second and third subblocks define the neighboring samples of whole block. Again, any combination of the neighboring samples of the first, second and third subblocks are used for determining the refined LIC parameters for the third subblock. Then, the step 13 is repeated for the third subblock: the linear model based on the refined LIC parameters is then applied to the reference subblock as in Equation 3 to obtain a LIC prediction for the third subblock. The LIC prediction is then used in the encoding or decoding method.

Finally, in parallel of the processing of the previous subblocks, the fourth subblock (4 on FIG.12) is processed. In an iterated step 12, the refined linear model parameters for the fourth subblock is determined based on any combination of the previously available neighboring samples. As shown on FIG. 12, no additional neighboring samples are available at this step. Then, the step 13 is repeated for the fourth subblock: the linear model based on the refined LIC parameters is then applied to the reference subblock of the fourth subblock to obtain a LIC prediction for the fourth subblock. The LIC prediction is then used in the encoding or decoding method.

Thus, the linear model parameters for the block are determined by iteratively determining refined linear model parameters for a current subblock in the block and determining an illumination compensated prediction for the current subblock based on the refined linear model parameters for the current subblock. Advantageously, the LIC derivation and application according to the general aspect of at least one embodiment is easily compatible with pipelined subblock-based motion compensation.

FIG. 11 illustrates an example encoding or decoding method comprising using linear model in a pipelined subblock-based motion compensation according to a general aspect of at least one embodiment. As shown on FIG.11, the LIC (including linear model derivation and linear model application) is processed per subblock in parallel.

More detailed examples embodiments are now detailed.

*2.2 At least one embodiment comprising successively refine LIC parameters with available data*

Neighboring samples, or motion information are not all available for computing LIC parameters for the whole block at once, but subblock per subblock.

In the following methods, the LIC parameters are computed for the first sub-block, and then refined for the subsequent subblocks when data is available, ie the subsequent subblock are processed for inter-prediction in the pipeline.

According to a first embodiment, the neighboring samples are for a current subblock accessed in memory and stored in a buffer of LIC samples for the block when they become available. Then the stored samples are used to compute LIC parameters depending. Knowing the sub-block location, deducing the neighboring samples that are available is immediate.

The LIC parameters a and b, respectively the scaling factor and the offset, are computed using Equation 2 defined above, but with a sub-set of available neighboring samples, for a sub-block i:

$$a_i = \left( \frac{\sum_i ref(s) \times cur(r) - \frac{\sum_i ref(s) \times \sum_i cur(r)}{N_i}}{\sum_i cur(r)^2 - \frac{\sum_i ref(s) \times \sum_i ref(s)}{N_i}} \right)$$

$$b_i = \frac{\sum_i cur(r)}{N_i} - a_i \times \frac{\sum_i ref(s)}{N_i}$$

2.2.1 raster-scan order

According to a particular variant of the first embodiment, neighboring samples are available when computing each sub-block, and the LIC parameters can be computed with all available samples. It means for example, that for the second row of sub-blocks, all the neighbor samples above are available and used for determining refined LIC parameters for the second, third and fourth subblocks as illustrated n FIG. 12. In other words, the number of samples used in LIC parameters derivation successively increases with available neighboring data of the block.

2.2.2 position-dependent method with partial model buffers

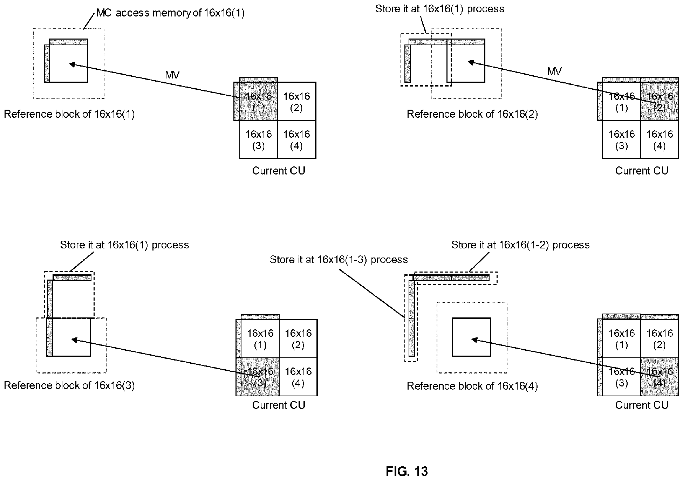

According to another particular variant of the first embodiment, neighboring samples are available when computing each sub-block as above, but the LIC parameters are computed with only closest available samples. It means for example, that for the second row of sub-blocks, not all the neighbor samples above are used, but only those directly above (e.g. excluding top-right pixels for the bottom-left sub-block 3) as illustrated on FIG. 13.

2.2.3 at least embodiment with partial sums

According to another particular variant of the first embodiment, instead of storing neighboring samples in a buffer, partial sums (sumX$_{j,k}$) for models are stored in a buffer. Storing a reduced fixed number of values improved memory footprint and partial sums are not recomputed for each subblock LIC process.

Minimum partial sums can be stored, for example only top neighbors of a current sub-block, or only left neighbors of a current subblock, for j being top or left neighborhood, and k the sub-block index:

$$\mathrm{sumC}_{j,k} = \sum_{j,k} cur(r)$$

$$\mathrm{sumR}_{j,k} = \sum_{j,k} ref(s)$$

$$\mathrm{sumRC}_{j,k} = \sum_{j,k} ref(s) \times cur(r)$$

$$\mathrm{sumCC}_{j,k} = \sum_{j,k} cur(r) \times cur(r)$$

$$a_i = \left( \frac{\sum_{j,k \in i} \text{sumRC}_{j,k} - \frac{\sum_{j,k \in i} \text{sumR}_{j,k} \times \sum_{j,k \in i} \text{sumC}_{j,k}}{N_i}}{\sum_{j,k \in i} \text{sumCC}_{j,k} - \frac{\sum_{j,k \in i} \text{sumR}_{j,k} \times \sum_{j,k \in i} \text{sumR}_{j,k}}{N_i}} \right)$$

$$b_i = \frac{\sum_{j,k \in i} \text{sumC}_{j,k}}{N_i} - a_i \times \frac{\sum_{j,k \in i} \text{sumR}_{j,k}}{N_i}$$

According to this variant, the partial sums with the smallest size, corresponding to subblock width, or subblock height, are stored. In others words, the partial sums cannot be split further and every combination of partial sums by addition is possible to determine the linear model parameters.

Alternatively, according to another particular variant of the first embodiment, less partial sums are stored if previous partial sums are already aggregated. For example, partial sums for first sub-block can be aggregated for first sub-block (top-left) and reused for second and third sub-blocks. In other words, these less partial sums can be split, but it is not useful to keep more granularity, so they are already pre-combined.

In yet another particular variant of the first embodiment, other partial data are stored. This variant is particularly advantageous if the model is not issued from a least squares' optimization. Stored partial data are different, because they depend on the model. For example partial data can be:

$$\sum_{j,k} cur(r)$$

$$\sum_{j,k} ref(s)$$

$$\sum_{j,k} |cur(r)|$$

*2.3 At least one embodiment comprising combining sub-models*

According to a second embodiment, instead of storing neighboring samples or partial sums for deriving LIC parameters, partial LIC parameters are derived and stored ($a_i$ and $b_i$).

For example, parameters for first subblock - top-left (1) - are stored as ($a_1$ and $b_1$). Parameters for second subblock - top right (2) - are computed as (normal equation; integer division implemented with shift):

$$a_2 = \frac{(a_1 + a_{2t})}{2} = (a_1 + a_{2t} + 1) \gg 1$$

$$b_2 = \frac{(b_1 + b_{2t})}{2} = (b_1 + b_{2t} + 1) \gg 1$$

with $a_{2t}$ and $b_{2t}$ being partial models computed from top neighbors of the second subblock only. This has the advantage to avoid a division by a number of samples $N_i$ that could be non-power of two.

Moreover, this gives more weight to closest samples to the current subblock in the LIC parameters refinement, which improves prediction accuracy.

*2.4 At least one embodiment wherein refined linear model is independently determined for each subblock*

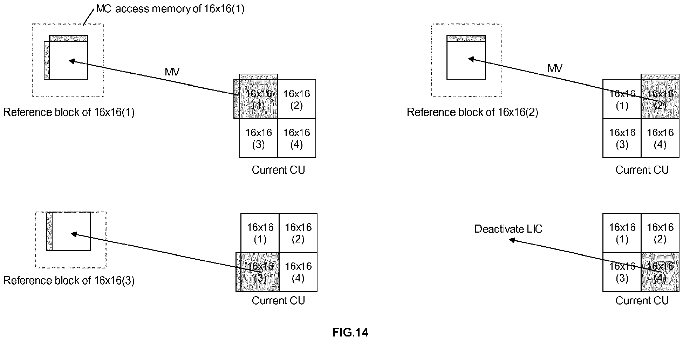

According to a third embodiment, instead of using multiple partial sums or partial models, only available neighboring samples for current sub-block are used for determining LIC parameters for current sub-block as illustrated on FIG. 14. Again, the number of pixels is advantageously directly a power of two, which simplifies subsequent divisions (divisions by power of two are replaced by a simpler bit shift). For the 4 subblock partition, the first subblock LIC parameters are derived from left samples of the above row neighboring samples and top samples of a left column neighboring samples; the second subblock LIC parameters are derived from right samples of the above row neighboring samples, the third subblock LIC parameters are derived from bottom samples of the left column neighboring samples, and LIC is disabled for the fourth block.

*2.5 At least one embodiment comprising using motion information from initial motion calculation*

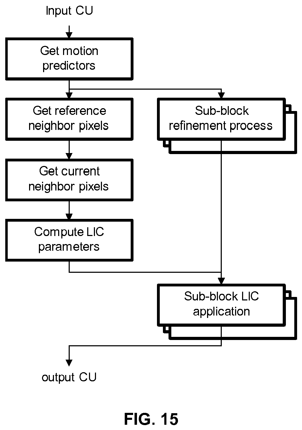

In order to prevent data dependency issues, LIC parameters can also be computed before sub-block refinement process as illustrated on the pipelined process of FIG. 9. The motion vector predictor (e.g. MV0 and MV1 in FIG. 8 in the case of DMVR) is used instead of the real motion vector (e.g. MV0' and MV1' in FIG. 8) in order to get the neighboring reference pixels. The LIC parameters can thus be computed prior to sub-block processes, and LIC can be applied per sub-block with the same parameters for each sub-block as illustrated on FIG. 15.

**3 Additional Embodiments and Information**

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

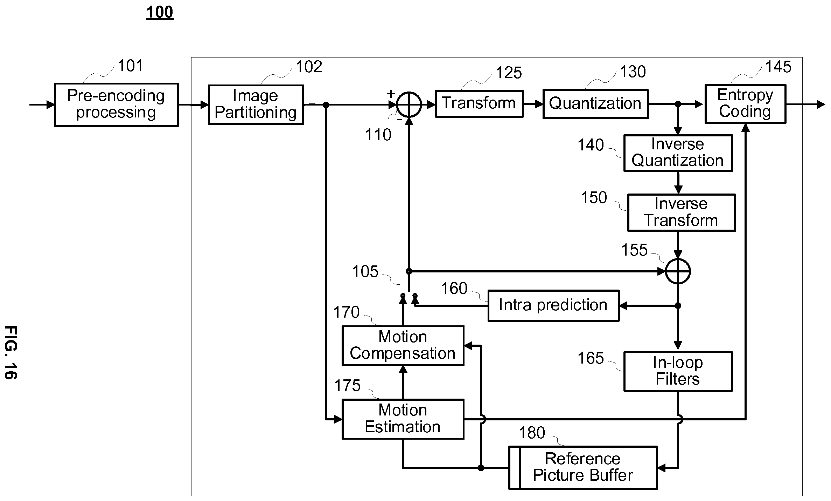

The aspects described and contemplated in this application can be implemented in many different forms. FIGs. 16, 17 and 18 below provide some embodiments, but other embodiments are contemplated and the discussion of FIGs. 16, 17 and 18 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably. Usually, but not necessarily, the term "reconstructed" is used at the encoder side while "decoded" is used at the decoder side.

Various methods are described herein, and each of the methods comprises one or more steps or actions for achieving the described method. Unless a specific order of steps or actions is required for proper operation of the method, the order and/or use of specific steps and/or actions may be modified or combined.

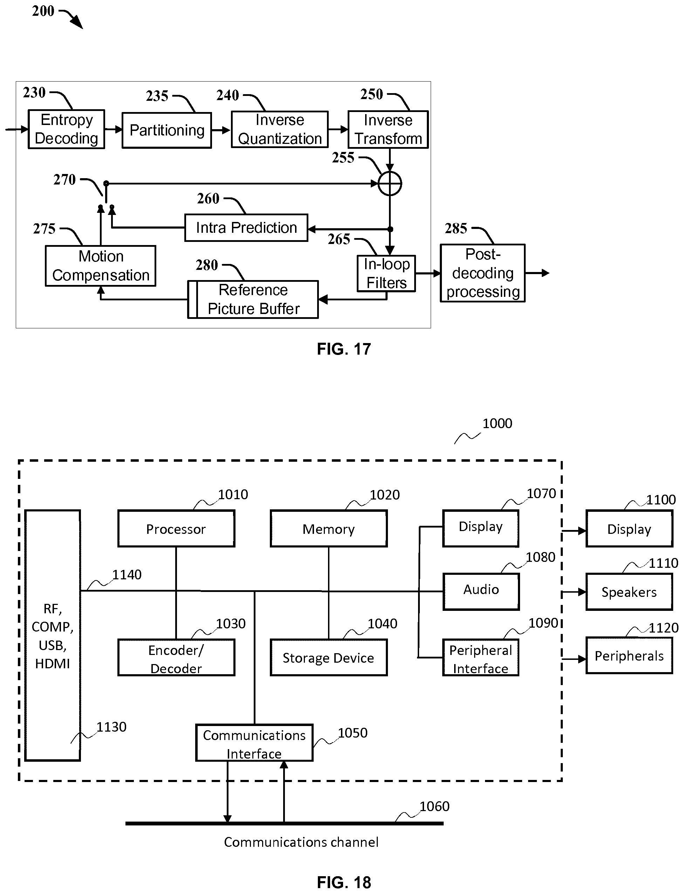

Various methods and other aspects described in this application can be used to modify modules, for example, the motion compensation (170, 275), motion estimation (175), entropy coding, intra (160,260) and/or decoding modules (145, 230), of a video encoder 100 and decoder 200 as shown in FIG. 16 and FIG. 17. Moreover, the present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

Various numeric values are used in the present application, for example. The specific values are for example purposes and the aspects described are not limited to these specific values.

FIG. 16 illustrates an encoder 100. Variations of this encoder 100 are contemplated, but the encoder 100 is described below for purposes of clarity without describing all expected variations.

Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the preprocessing, and attached to the bitstream.

In the encoder 100, a picture is encoded by the encoder elements as described below. The picture to be encoded is partitioned (102) and processed in units of, for example, CUs. Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking/SAO (Sample Adaptive Offset) filtering to reduce encoding artifacts. The filtered image is stored at a reference picture buffer (180).

FIG. 17 illustrates a block diagram of a video decoder 200. In the decoder 200, a bitstream is decoded by the decoder elements as described below. Video decoder 200 generally performs a decoding pass reciprocal to the encoding pass as described in FIG. 17. The encoder 100 also generally performs video decoding as part of encoding video data.

In particular, the input of the decoder includes a video bitstream, which can be generated by video encoder 100. The bitstream is first entropy decoded (230) to obtain transform coefficients, motion vectors, and other coded information. The picture partition information indicates how the picture is partitioned. The decoder may therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image. The filtered image is stored at a reference picture buffer (280).

The decoded picture can further go through post-decoding processing (285), for example, an inverse color transform (e.g. conversion from YCbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

FIG. 18 illustrates a block diagram of an example of a system in which various aspects and embodiments are implemented. System 1000 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1000, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1040 can include an internal storage device, an attached storage device (including detachable and non-detachable storage devices), and/or a network accessible storage device, as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1000 can be provided through various input devices as indicated in block 1130. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High *Definition* Multimedia Interface (HDMI) input terminal. Other examples, not shown in FIG. 18, include composite video.

In various embodiments, the input devices of block 1130 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface ICs or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1000 can be provided within an integrated housing, Within the integrated housing, the various elements can be interconnected and transmit data therebetween using suitable connection arrangement, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or other device. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller (T Con) chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, determining Local Illumination Compensation parameters and performing Local Illumination Compensation per subblock, wherein the subblocks are processed in parallel for motion compensation in a pipelined architecture.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application, for example, for example, determining Local Illumination Compensation parameters and performing Local Illumination Compensation per subblock, wherein the subblocks are processed in parallel for motion compensation in a pipelined architecture.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein, for example, LIC flag, are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, , a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of a plurality of parameters for region-based parameter selection for LIC. For instance, the enabling/disabling LIC may depends on the size of the region. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of embodiments. Features of these embodiments can be provided alone or in any combination, across various claim categories and types. Further, embodiments can include one or more of the following features, devices, or aspects, alone or in any combination, across various claim categories and types:

- Modifying the Local Illumination Compensation used in inter prediction process applied in the decoder and/or encoder.
- Modifying the derivation of Local Illumination Compensation parameters used in inter prediction process applied in the decoder and/or encoder.
- Adapting the samples used in Local Illumination Compensation to a pipelined motion compensation subblock architecture.
- Iteratively determining refined linear model parameters for a current subblock in a block based on available data;
- Determining the refined linear model parameters based on all previously accessed neighboring samples for the block.
- Determining the refined linear model parameters for the subblocks in the block iteratively in raster-scan order.
- Determining the refined linear model parameters based on previously accessed neighboring samples closest to samples of the current subblock.
- Storing the accessed neighboring samples of the current subblock into a buffer samples for the block.
- Processing and storing partial sums, the partial sums being obtained from the neighboring samples of the current subblock;
- Determining partial linear model parameters for a current subblock and determining refined linear model parameters from a weighted sum of the previously determined partial linear model parameters for the subblocks.
- Refining the linear model parameters independently for the subblocks of the block.
- Enabling or disabling illumination compensation for a subblock according to its location in the block.
- Inserting in the signalling syntax elements that enable the decoder to identify the illumination compensation method to use.
- A bitstream or signal that includes one or more of the described syntax elements, or variations thereof.
- A bitstream or signal that includes syntax conveying information generated according to any of the embodiments described.
- Inserting in the signaling syntax elements that enable the decoder to adapt LIC in a manner corresponding to that used by an encoder.
- Creating and/or transmitting and/or receiving and/or decoding a bitstream or signal that includes one or more of the described syntax elements, or variations thereof.
- Creating and/or transmitting and/or receiving and/or decoding according to any of the embodiments described.
- A method, process, apparatus, medium storing instructions, medium storing data, or signal according to any of the embodiments described.
- A TV, set-top box, cell phone, tablet, or other electronic device that performs adaptation of LIC parameters according to any of the embodiments described.
- A TV, set-top box, cell phone, tablet, or other electronic device that performs adaptation of LIC parameters according to any of the embodiments described, and that displays (e.g. using a monitor, screen, or other type of display) a resulting image.
- A TV, set-top box, cell phone, tablet, or other electronic device that selects (e.g. using a tuner) a channel to receive a signal including an encoded image, and performs adaptation of LIC parameters according to any of the embodiments described.
- A TV, set-top box, cell phone, tablet, or other electronic device that receives (e.g. using an antenna) a signal over the air that includes an encoded image, and performs adaptation of LIC parameters according to any of the embodiments described.

**Claims**

1. A method for video encoding, comprising:

  determining, for a block being encoded in a picture, linear model parameters for a local illumination compensation based on spatial neighboring reconstructed samples and corresponding reference samples; said block being partitioned into subblocks processed in parallel for motion compensation;

encoding the block using local illumination compensation based on the determined linear model parameters;
wherein determining the linear model parameters for the block comprises iteratively determining refined linear model parameters for a current subblock in the block;
and wherein for encoding the block, the local illumination compensation uses a linear model for the current subblock based on the refined linear model parameters.

2. A method for video decoding, comprising:

determining, for a block being decoded in a picture, linear model parameters for a local illumination compensation based on spatial neighboring reconstructed samples and corresponding reference samples; said block being partitioned into subblocks processed in parallel for motion compensation;
decoding the block using local illumination compensation based on the determined linear model parameters;
wherein determining the linear model parameters for the block comprises iteratively determining refined linear model parameters for a current subblock in the block;
and wherein for decoding the block, the local illumination compensation uses a linear model for the current subblock based on the refined linear model parameters.

3. An apparatus for video encoding, comprising one or more processors, and at least one memory and wherein the one or more processors is configured to:

determine, for a block being encoded in a picture, linear model parameters for a local illumination compensation based on spatial neighboring reconstructed samples and corresponding reference samples; said block being partitioned into subblocks processed in parallel for motion compensation;
encode the block using local illumination compensation based on the determined linear model parameters;
wherein the linear model parameters for the block are determined by iteratively determining refined linear model parameters for a current subblock in the block:
and wherein to encode the block, the local illumination compensation uses a linear model for the current subblock based on the refined linear model parameters.

4. An apparatus for video decoding, comprising one or more processors, and at least one memory and wherein the one or more processors is configured to:

determine, for a block being decoded in a picture, linear model parameters for a local illumination compensation based on spatial neighboring reconstructed samples and corresponding reference samples; said block being partitioned into subblocks processed in parallel for motion compensation;
decode the block using local illumination compensation based on the determined linear model parameters;
wherein the linear model parameters for the block are determined by iteratively determining refined linear model parameters for a current subblock in the block:
and wherein to decode the block, the local illumination compensation uses a linear model for the current subblock based on the refined linear model parameters.

5. The method of claim 1 or 2 or the apparatus of claim 3 or 4, determining the refined linear model parameters for a current subblock comprises:

- accessing spatial neighboring reconstructed samples of the current subblock and corresponding reference samples;
- determining the refined linear model parameters based on previously accessed spatial neighboring reconstructed samples and corresponding reference samples for the block.

6. The method of claim 5 or the apparatus of claim 5, wherein determining the refined linear model parameters for a current subblock comprises determining the refined linear model parameters based on all previously accessed spatial neighboring reconstructed samples and corresponding reference samples for the block.

7. The method of claim 6 or the apparatus of claim 6, wherein determining the linear model parameters for the block comprises determining the refined linear model parameters for the subblocks in the block iteratively in raster-scan order.

8. The method of claim 5 or the apparatus of claim 5, determining the refined linear model parameters for a current subblock comprises determining the refined linear model parameters based on previously accessed spatial neighboring reconstructed samples and corresponding reference samples closest to samples of the current subblock.

9. The method of any of claims 5 to 8 or the apparatus of any claims 5 to 8, determining the refined linear model parameters for a current subblock further comprises

   - storing the accessed spatial neighboring reconstructed samples of the current subblock and corresponding reference samples into a buffer of previously accessed spatial neighboring reconstructed samples and corresponding reference samples for the block; and
   - determining the refined linear model parameters based on stored samples.

10. The method of any of claim 5 or the apparatus of claim 5, determining the refined linear model parameters for a current subblock comprises

   - processing partial sums from the accessed spatial neighboring reconstructed samples of the current subblock and corresponding reference samples;
   - storing partial sums for the current subblock into a buffer of partial sums for the block and;
   - determining the refined linear model parameters based on stored partial sums.

11. The method of any of claims 1 or 2 or the apparatus of any claims 3 or 4, wherein determining the refined linear model parameters for a current subblock comprises:

   - determining partial linear model parameters based on the spatial neighboring reconstructed samples and corresponding reference samples for a current subblock;
   - determining refined linear model parameters from a weighted sum of the previously determined partial linear model parameters for the subblocks.

12. The method of any of claims 1 or 2 or the apparatus of any claims 3 or 4, wherein the refined linear model parameters are determined independently for the subblocks of the block.

13. The method of claim 12 or the apparatus of claim 12, wherein the local illumination compensation is disabled based on the location of a subblock in the block.

14. The method of claim 1 or 2 or any of claims 5 to 8 the apparatus of claim 3 or 4 or any of claims 5 to 8, wherein the reconstructed samples and corresponding reference samples are co-located relatively to a L-shape comprising a row of samples over the block and a column of samples at the left of the block, the co-location being determined according motion compensation information for the block resulting from motion compensation sequential processing.

15. The method of claim 14 or the apparatus of claim 14, wherein motion compensation information for the block comprises a motion predictor and said motion predictor for the block is refined for each subblock in parallel into motion compensation information; and
wherein the co-location is determined according to motion predictor for the block instead of motion compensation information for the block.

FIG. 1

FIG. 2

```
┌─────────────────────┐                              ┌─────────────────────┐
│   Compute ref-0     │─ 300           ┌─ 320         │   Compute ref_1     │─ 300
└─────────────────────┘          ┌──────────────────┐└─────────────────────┘
         │              ┌─ 310    │ Get reconstructed │         │     ┌─ 310
         ▼              │         │ samples in L-shape│         ▼     │
┌─────────────────────┐ │        └──────────────────┘┌─────────────────────┐
│ Collect reference-0 │ │                             │ Collect reference-1 │
│  samples in L-shape │           │                   │  samples in L-shape │
└─────────────────────┘           │                   └─────────────────────┘
         │                        │                             │
         ▼                        ▼                             ▼
┌─────────────────────┐                     ┌─────────────────────┐
│   Compute LIC-0     │                     │   Compute LIC-1     │─ 330
│  parameters (eq.2)  │                     │  parameters (eq.2)  │
└─────────────────────┘                     └─────────────────────┘
         │                                             │
         ▼                                             ▼
┌─────────────────────┐                     ┌─────────────────────┐
│ Compute pred_0 with │                     │ Compute pred_1 with │─ 340
│    LIC-0 (eq.3)     │                     │    LIC-1 (eq.3)     │
└─────────────────────┘                     └─────────────────────┘
         │                                             │
         └──────────────────┬──────────────────────────┘
                            ▼
                  ┌─────────────────────┐
                  │  Combine pred_0 and │─ 350
                  │        pred_1       │
                  └─────────────────────┘
```

**FIG. 3**

```
┌─────────────────────┐  ┌─────────────────────┐
│   Compute ref-0     │  │   Compute ref_1     │─ 300
└─────────────────────┘  └─────────────────────┘
         │                        │
         ▼                        ▼
       ┌─────────────────────┐
       │  Combine ref_0 and  │─ 360
       │        ref_1        │
       └─────────────────────┘
                │
                ▼
       ┌─────────────────────┐      ┌─────────────────────┐
       │  Collect samples in L-│─370 │ Collect reconstructed│─ 320
       │        shape        │      │  samples in L-shape  │
       └─────────────────────┘      └─────────────────────┘
                │                             │
                └──────────────┬──────────────┘
                              ▼
                    ┌─────────────────────┐
                    │    Compute LIC      │─ 330
                    │  parameters (eq.2)  │
                    └─────────────────────┘
                              │
                              ▼
                    ┌─────────────────────┐
                    │  Compute pred with  │─ 340
                    │     LIC (eq.3)      │
                    └─────────────────────┘
```

**FIG. 4**

**FIG. 5**

**FIG. 6**

**FIG. 7a**

MV_L0 from collocated
block

MV_L1 from collocated
block

MV_L0 for current block
(after scaling)

MV_L1 for current block
(after scaling)

**FIG. 7b**

Bi-prediction as
bilateral template

- Step1: Generate bilateral template from
  the prediction blocks referred by the
  initial MV0 and MV1
- Step2: Bilateral template matching to find
  the best matched blocks referred by the
  updated MV0' and MV1'

Step1

Step2

Step1    Step2

Step2

MV0

MV0'

MV1'

MV1

Reference block in list0

Current block

Reference block in list1

**FIG. 8**

16x16 unit

VPDU unit

memory access | DMVR | MC

Calc MV

memory access | DMVR | MC | LIC

memory access | DMVR | MC

IQ/IT

DBF

Intra Pred

**FIG. 9**

<u>10</u>

Determine linear model parameters of a
LIC for a first subblock in the block — 11

Refine the determined model
parameters for a subsequent
subblock of the block — 12

Iterate on
subblocks

Encode/Decode the block using LIC
on the subblocks based on the
refined model parameters — 13

**FIG. 10**

16x16 unit

VPDU unit

memory access | DMVR | MC | LIC

Calc MV

memory access | DMVR | MC | LIC

memory access | DMVR | MC | LIC

IQ/IT

Intra Pred

DBF

FIG. 11

MC access memory of 16x16(1)

MV

Reference block of 16x16(1)

| 16x16 (1) | 16x16 (2) |
| 16x16 (3) | 16x16 (4) |

Current CU

Store it at 16x16(1) process

MV

Reference block of 16x16(2)

| 16x16 (1) | 16x16 (2) |
| 16x16 (3) | 16x16 (4) |

Current CU

Store it at 16x16(1-2) process

Reference block of 16x16(3)

| 16x16 (1) | 16x16 (2) |
| 16x16 (3) | 16x16 (4) |

Current CU

Store it at 16x16(1-3) process

Store it at 16x16(1-2) process

Reference block of 16x16(4)

| 16x16 (1) | 16x16 (2) |
| 16x16 (3) | 16x16 (4) |

Current CU

**FIG. 12**

**FIG. 13**

MC access memory of 16x16(1)

16x16
(1) | 16x16
(2)

16x16
(3) | 16x16
(4)

MV

Reference block of 16x16(1)

Current CU

Reference block of 16x16(2)

16x16
(1) | 16x16
(2)

16x16
(3) | 16x16
(4)

MV

Current CU

Reference block of 16x16(3)

16x16
(1) | 16x16
(2)

16x16
(3) | 16x16
(4)

Current CU

Deactivate LIC

16x16
(1) | 16x16
(2)

16x16
(3) | 16x16
(4)

Current CU

FIG.14

Input CU

Get motion
predictors

Get reference
neighbor pixels

Sub-block
refinement process

Get current
neighbor pixels

Compute LIC
parameters

Sub-block LIC
application

output CU

**FIG. 15**

FIG. 16

200

**FIG. 17**

**FIG. 18**

Europäisches
Patentamt

European
Patent Office

Office européen
des brevets

## EUROPEAN SEARCH REPORT

Application Number

EP 19 30 5294

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/366415 A1 (LIU HONGBIN [US] ET AL) 15 December 2016 (2016-12-15) <br> * abstract * <br> * paragraphs [0010] - [0015], [0137], [0148] * | 1-15 | INV. <br> H04N19/176 <br> H04N19/117 <br> H04N19/463 <br> H04N19/14 <br> H04N19/82 <br> H04N19/192 |
| A | US 2016/366416 A1 (LIU HONGBIN [US] ET AL) 15 December 2016 (2016-12-15) <br> * abstract * <br> * paragraphs [0006] - [0039], [0068], [0069], [0194] - [0206] * | 1-15 | |
| A | CHEN J ET AL: "JVET-G1001- Algorithm description of Joint Exploration Test Model 7 (JEM7)", <br> JOINT VIDEO EXPLORATION TEAM (JVET)OF ITU-T SG 16 WP 3 AND ISO/IEC JTC 1/SC 29/WG 11, 7TH MEETING, 13-7-2017 - 21-7-2017; TORINO <br> , <br> 19 August 2017 (2017-08-19), pages i-iv, 1, XP030150980, <br> Retrieved from the Internet: <br> URL:http://phenix.int-evry.fr/jvet/doc_end _user/documents/7_Torino/wg11/JVET-G0001-v 1.zip <br> * section "2.3.5. Local illumination compensation" * | 1-15 | |

TECHNICAL FIELDS
SEARCHED      (IPC)

H04N

-/--

The present search report has been drawn up for all claims

| Place of search | Date of completion of the search | Examiner |
|---|---|---|
| Munich | 16 July 2019 | Fassnacht, Carola |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 1 of 2

Europäisches
Patentamt

European
Patent Office

Office européen
des brevets

## EUROPEAN SEARCH REPORT

Application Number

EP 19 30 5294

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "Description of Core Experiments in Multiview Video Coding", 76. MPEG MEETING;03-04-2006 - 07-04-2006; MONTREUX; (MOTION PICTURE EXPERT GROUP OR ISO/IEC JTC1/SC29/WG11),, no. N8019, 7 April 2006 (2006-04-07), XP030014511, * section "6.CE1 PARTIALLY COMPLETED preliminary results in M13143, m13194, m13317", with subsections and Figs. CD-2-1 and CD-2-1. * ----- | 1-15 | |

| | | | TECHNICAL FIELDS SEARCHED (IPC) |
|---|---|---|---|

The present search report has been drawn up for all claims

| Place of search | Date of completion of the search | Examiner |
|---|---|---|
| Munich | 16 July 2019 | Fassnacht, Carola |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 30 5294

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2019

| Patent document cited in search report | Publication date | Patent family member(s) | Publication date |
|---|---|---|---|
| US 2016366415 A1 | 15-12-2016 | AU 2016274480 A1 | 30-11-2017 |
| | | CN 107710764 A | 16-02-2018 |
| | | EP 3308544 A1 | 18-04-2018 |
| | | JP 2018522466 A | 09-08-2018 |
| | | KR 20180016389 A | 14-02-2018 |
| | | TW 201711463 A | 16-03-2017 |
| | | US 2016366415 A1 | 15-12-2016 |
| | | WO 2016200777 A1 | 15-12-2016 |
| US 2016366416 A1 | 15-12-2016 | AU 2016274482 A1 | 30-11-2017 |
| | | CN 107690810 A | 13-02-2018 |
| | | EP 3308543 A1 | 18-04-2018 |
| | | JP 2018522464 A | 09-08-2018 |
| | | KR 20180016390 A | 14-02-2018 |
| | | TW 201703531 A | 16-01-2017 |
| | | US 2016366416 A1 | 15-12-2016 |
| | | WO 2016200779 A1 | 15-12-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- ITU-T H.265 Telecommunication standardization sector of ITU (10/2014), series H: audiovisual and multimedia systems, infrastructure of audiovisual services - coding of moving video, High efficiency video coding. *Recommendation ITU-T H.265*